(19) Europäisches Patentamt European Patent Office Office européen des brevets

(11) **EP 1 577 116 B1**

(12) **EUROPEAN PATENT SPECIFICATION**

(45) Date of publication and mention
of the grant of the patent:
**28.02.2007 Bulletin 2007/09**

(21) Application number: **03748552.1**

(22) Date of filing: **22.09.2003**

(51) Int Cl.:
**B41N 1/24** (2006.01)   **C08L 67/02** (2006.01)

(86) International application number:
**PCT/JP2003/012079**

(87) International publication number:
**WO 2004/060691 (22.07.2004 Gazette 2004/30)**

(54) **HIGHLY SENSITIVE THERMOSENSITIVE POLYESTER FILM FOR POROUS PRINTING BASE PAPER**

HOCHSENSIBLE WÄRMEEMPFLINDLICHE POLYESTERFOLIE FÜR PORÖSES DRUCK-ROHPAPIER

FILM EN POLYESTER THERMOSENSIBLE HAUTEMENT SENSIBLE DESTINE A DU PAPIER DE BASE D'IMPRESSION POREUX

(84) Designated Contracting States:
**DE FR GB**

(30) Priority: **26.12.2002 JP 2002375866**

(43) Date of publication of application:
**21.09.2005 Bulletin 2005/38**

(73) Proprietor: **Mitsubishi Polyester Film Corporation Tokyo 108-0014 (JP)**

(72) Inventors:
• **MITSUHASHI, Katsuzou, Central Research Laboratory Maihara-shi Shiga-ken (JP)**
• **KUBOTA, Kouji, Central Research Laboratory Maihara-shi Shiga-ken (JP)**

(74) Representative: **ter Meer, Nicolaus et al TER MEER STEINMEISTER & PARTNER GbR, Patentanwälte, Mauerkircherstrasse 45 81679 München (DE)**

(56) References cited:
JP-A- 7 068 964    JP-A- 7 164 777
JP-A- 9 123 633    JP-A- 9 262 959
JP-A- 11 348 449    JP-A- 2000 335 136
JP-A- 2001 121 836    JP-A- 2001 150 831
JP-A- 2002 029 170    US-A- 5 458 949

**Description**

TECHNICAL FIELD

The present invention relates to a polyester film for thermal mimeograph stencil paper. More particularly, it relates to a film for high sensitive thermal mimeograph stencil paper, which stencil paper comprises a composition of three or more types of polyester, excels in perforating sensitivity, anticurl properties, working life (plate life) and running durability while maintaining high heat resistance and excellent mechanical and shrink properties, and is also capable of providing high resolution, sharpness of the printed images and high-quality printing

BACKGROUND ART

As thermal mimeograph stencil paper, there has been known one comprising a thermoplastic resin film such as a polyester film and an ink-pervious porous tissue paper laminated together with an adhesive. In use of such conventional thermal mimeograph stencil paper, however, the adhesive tends to collect at the portion where the fibers are piled up or the portion where the film contacts, and perforation of the stencil paper by the thermal head becomes imperfect at such portions, which may cause "non perforations" in the print. Therefore, the fibers used for the support must be super-fine so as not to hinder the passage of ink, and also, in carrying out lamination, the thickness of the support and the amount of the adhesive applied must be minimized. Thus, the film used for the stencil is required to meet the following conditions.

(1) The film must have high strength as well as high Young's modulus. That is, the film is required to have sufficiently high strength and elasticity to endure tension when it is laminated with a porous tissue paper or nonwoven fabric.
(2) The film must exhibit good handling qualities and high productivity in the film forming and stencil making operations. More specifically, the film is required to be capable of moving smoothly and being wound up with low tension, and to be free of any risk of being distorted when exposed to low temperatures. Such distortion at low temperatures becomes a cause of curling with a change of ambient temperature or humidity during lamination or storage. Particularly, large curl of the film caused by its natural shrinkage under a high temperature environment in the summer time induces improper conveyance of the stencil paper in the printing machine and other troubles such as choking of the machine with the stencil paper, giving rise to more serious problems.
(3) The film must have good thermal perforating sensitivity. That is, the film must be capable of perforation by the thermal head with low energy, more specifically the film is required to be fusible with a small quantity of heat and to have sufficient heat shrink properties to make it possible to obtain perforations of an appropriate size for forming clear images.
(4) Perforations formed with specified energy must be uniform in shape and the probability of correct perforation must be high. Also, the film portions around the perforations should not shrink and deform. Deformation of the film portions around the perforations or rise of the peripheral edges of perforations may adversely affect sharpness of fine images such as photographic images.

As the films to be used for the above purpose, the following films have been proposed: a biaxially stretched film of a thermoplastic resin, with its thermal properties being specified to improve the printing properties (Japanese Patent Application Laid-Open (KOKAI) No. 62-149496); a film specified in average particle size and thickness (Japanese Patent Application Laid-Open (KOKAI) No. 63-286396); a film specified in surface roughness and number of projections (Japanese Patent Application Laid-Open (KOKAI) No. 63-227634); and films specified in heat shrink properties (Japanese Patent Application Laid-Open (KOKAI) Nos. 62-282983, 63-160895, 63-312192 and 3-30996). None of these proposed films, however, was unable to solve all of the said prior art problems.
Biaxially stretched polyester films for thermosensitive stencil paper comprising three types of polyester are disclosed in JP-A-2001/150 831, JP-A-09/123 633 and JP-A-09/262 959.
The present invention has been made in view of the above circumstances, and its object is to provide a film for thermal mimeograph stencil paper having excellent perforating sensitivity and improved in resolution in the printing process, plate-making distortion and working life (plate life).

DISCLOSURE OF THE INVENTION

As a result of the present inventors' earnest studies on the subject matter, it has been found that the above problems can be solved with ease by providing a film of a specific structure, and has completed the present invention.
In an aspect of the present invention, there is provided a polyester film for high sensitive thermal mimeograph stencil paper, which is a biaxially stretched polyester film comprising a composition of three or more types of polyester and having a thickness of 1.0 to 7.0 $\mu$m,

the Young's modulus of said film being not less than 3,000 MPa, and

the major dispersion temperature E"(t) of its dynamic viscoelasticity-temperature characteristics as determined by the dynamic viscoelasticity method being 60 to 75°C.

A detailed description of the present invention is given below.

The biaxially stretched polyester film of the present invention is a very thin film, so that its Young's modulus needs to be not less than 3,000 MPa, preferably not less than 3,500 MPa, for providing improvements on workability of the stencil paper, its mobility in the printing machine and its working life. When the term "Young's modulus" is used in the present invention, it means Young's modulus in the machine direction of the film. The film is scarcely loaded in its transverse direction, so that a Young's modulus of 3,000 MPa or greater is sufficient for providing the desired mobility, curl resistance and working life.

The peak value E"(T) of major dispersion temperature of the dynamic modulus-temperature characteristics of the polyester film of the present invention is essentially 60 to 75°C. If E"(T) exceeds 75°C, the thermal mimeograph stencil paper made by using this film proves low in perforability with low heat energy, causing a large rise at the edges of the perforations and a bad shape of the formed perforations and making it unable to obtain a high-degree perforating sensitivity which the present invention envisions to provide. On the other hand, if E"(T) is lower than 60°C, dimensional stability against heat of the film deteriorates and curling may occur in the stencil paper forming process or during storage of the produced stencil paper. Also, film deformation at the portions around the perforations may be enlarged by the action of perforating energy, impairing clearness of the photographic images.

Thickness of the film according to the present invention is 1.0 to 7.0 $\mu$m, preferably 1.0 to 3.0 $\mu$m, more preferably 1.0 to 2.0 $\mu$m. Smaller film thickness provides a greater decrease of heat transfer distance and a corresponding reduction of heat energy required for perforation, resulting in improvements of perforability, resolution in printing and print quality. If film thickness is less than 1.0 $\mu$m, although there is no problem with regard to perforability, the film strength proves low for uses where a large number of copies are to be printed, and the plate life is shortened. If film thickness exceeds 7.0 $\mu$m, it becomes necessary to increase the perforating energy, which is unfavorable in terms of working life of the thermal head.

The biaxially stretched film shrinkage starting temperature is usually not lower than 70°C, preferably not lower than 75°C, and the rate of heat shrinkage in the machine direction of the film is usually not less than 25%, preferably not less than 30%. A greater rate of shrinkage in the machine direction gives a better perforability. When the rate of shrinkage in the transverse direction ($S_{TD}$) at 90°C is not more than 90%, preferably not more than 60%, more preferably not more than 30% of the rate of shrinkage in the machine direction ($S_{MD}$) at the same temperature, image distortion due to film shrinkage around the perforations can be lessened to make it possible to maintain sharpness of the image.

The shrinkage starting temperature with TMA greatly affects curling of the film under its storage environment. Although the phenomenon of curling is dependent on Tg of the film, there is a tendency for curling to grow under a high-temperature and high-humidity master storage environment when the shrinkage starting temperature is below 70°C. Large curl is detrimental to passage and conveyance of paper in the plate printing machine. Particularly residual strain given to the film in the normal temperature region aggravates curling of the mimeograph stencil paper with change of temperature during storage.

"Polyethylene naphthalate (PEN)" mentioned in the present invention refers to the polymers whose structural units are substantially made up of polyethylene-2,6-naphthalate units, but it also includes the ethylene-2,6-naphthalate polymers modified by a small quantity, such as not more than 10 mol%, preferably not more than 5 mol% of a third component. Polyethylene naphthalate is usually produced by condensing a naphthalene-2,6-dicarboxylic acid or its functional derivative, for example dimethyl naphthalene-2,6-dicarboxylate, and ethylene glycol in the presence of a catalyst under the appropriate reaction conditions. As the third component in the above reaction, there can be used, for example, dicarboxylic acids such as adipic acid, sebacic acid, phthalic acid, isophthalic acid, terephthalic acid and naphthalene-2,7-dicarboxylic acid or their alkyl esters, oxycarboxylic acids such as P-oxybenzoic acid or their lower alkyl esters, and dihydric alcohols such as propylene glycol, trimethylene glycol, tetramethylene glycol, pentamethylene glycol and hexamethylene glycol.

"Polyethylene terephthalate (PET)" refers to the polyesters which can be obtained by using terephthalic acid or its esters and ethylene glycol as major starting materials, but it may contain a third component. The polyesters in the present invention are those of the structure in which not less than 80% of the repeating structural units are held by polyester units.

"Polyethylene terephthalate isophthalate" refers to the copolymer polyesters in which not less than 65 mol% of the dicarboxylic acid moiety is terephthalic acid, not less than 10 mol% thereof is isophthalic acid, and not less than 70% of the diol moiety is ethylene glycol.

"Polybutyrene terephthalate (PBT)" refers to the polyesters in which not less than 70 mol%, preferably not less than 80 mol% of the dicarboxylic moiety is terephthalic acid, and not less than 75 mol%, preferably not less than 80 mol% of the diol moiety is 1,4-butanediol.

Intrinsic viscosity of the PEN-based polyesters (A) is preferably not less than 0.5, more preferably 0.6 to 0.8. Intrinsic viscosity of the PET-based polyesters (B) is preferably not less than 0.5, more preferably 0.6 to 0.7. Intrinsic viscosity of the PBT polyesters (C) is preferably not less than 0.6, more preferably 0.8 to 1.0. If intrinsic viscosity of any of these polyesters is lower than the

above-defined range, it is hardly possible to provide desired dispersion, resulting in unsatisfactory properties of the produced film.

The polyesters constituting the film of the present invention preferably comprise (A) a PEN-based polyester, (B) a PET-based polyester and (C) a PBT-based polyester, with the ratios of these component polyesters preferably satisfying the following formulae (4) to (6) at the same time:

$$5 \leqq a \leqq 35 \qquad (4)$$

$$30 \leqq b \leqq 50 \qquad (5)$$

$$30 \leqq c \leqq 60 \qquad (6)$$

wherein "a" is the ratio (% by weight) of the component (A), "b" is the ratio (% by weight) of the component (B) and "c" is the ratio (% by weight) of the component (C).

Use of a PEN-based polyester (A) in the mixture of the said polyesters contributes to further improvement of strain resistance in plate making, durability against repetitive runs of printing and dimensional stability against change of temperature. This leads to a corresponding improvement of anticurl properties during storage of the mimeographing film master. It is particularly remarkable that use of this PEN-based polyester can provide the specific properties required of the high sensitive stencil paper with support of weak nerve. As shown above, "a" is 5 to 35% by weight, preferably 15 to 25% by weight. If "a" is not more than 5% by weight, it is difficult for the PEN-based polyester to exhibit its characteristic heat-resisting and high-strength properties. On the other hand, if "a" is not less than 35% by weight, the film lacks perforating sensitivity, resulting in an increase of incomplete perforations.

The ratio "b" of the PET-based polyester is, as mentioned above, 30 to 50% by weight, preferably 35 to 45% by weight. If this ratio is not more than 30% by weight, the film forming properties and film productivity are unsatisfactory and also it may become impossible to provide the shrink properties required for obtaining desired mechanical strength and perforating sensitivity of the film. If the ratio "b" exceeds 50% by weight, perforating sensitivity lowers and also the rise around the perforations enlarges to degrade the print quality.

The ratio "c" of the PBT-based polyester is, as mentioned above, 30 to 60% by weight, preferably 35 to 50% by weight. This quantity of PBT-based polyester has an effect on perforating sensitivity and gradational properties of the film. When the ratio "c" is not more than 30% by weight, perforability deteriorates, making it necessary to increase perforating energy. When this ratio is not less than 60% by weight, crystallization speed tends to elevate, resulting in bad stretchability of the sheet in the film forming process and a reduction of productivity.

The polyester film of the present invention can be obtained by melt-kneading a PEN-based polyester (A), a PET-based polyester (B) and a PBT-based polyester (C). This kneading may be conducted in the course of film forming operation or at a stage prior to the film forming step so as to effect uniform dispersion of the component polyesters.

Solution viscosity of the polyester film according to the present invention is preferably 0.5 to 1.0, more preferably 0.6 to 0.8. If melt viscosity is less than 0.5, the produced film may prove low in strength. If melt viscosity is more than 1.0, resin pressure at the time of melt extrusion may become too high, causing a large variation of thickness and sensitivity.

In the film of the present invention, in order to improve workability of the film in the film wind-up step in the film forming process, the coating and laminating step in stencil paper making, and the printing step, or to prevent the film from being fused to the thermal head during thermal perforation, it is preferable to roughen the film surface to afford appropriate slipperiness to the film, and for this purpose, fine inert particles are incorporated in the film.

The average size of the fine inert particles used in the present invention is preferably 0.2 to 1.0 time, more preferably 0.3 to 0.7 time, especially preferably 0.3 to 0.5 time the film thickness. If the average particle size is not less than 1.0 time the film thickness, planarity of the film surface may be impaired to cause unevenness of heat transfer. There may be also caused non-uniform perforation, lowering of resolution and impairment of print quality. If the average particle size is less than 0.2 time the film thickness, there is a tendency for film workability to deteriorate, such as reduced film wind-up performance, in the film forming and stencil making operations.

The particles are added in an amount of usually 0.05 to 3.0% by weight, preferably 0.1 to 2.0% by weight. If the amount of the particles added is less than 0.05% by weight, the film wind-up properties tend to deteriorate. If the amount of the particles added exceeds 3% by weight, the film surface has excessive roughening to cause unevenness in heat transfer, non-uniform perforation, reduced resolution and/or impairment of print quality.

Examples of the inert particles usable in the present invention include, but are not limited to, silicon oxide, titanium oxide, zeolite, silicon nitride, boron nitride, sellaite, alumina, calcium carbonate, magnesium carbonate, barium carbonate, calcium sulfate, barium sulfate, calcium phosphate, lithium phosphate, magnesium phosphate, lithium fluoride, kaolin, talc, carbon black, and the fine particles of crosslinked polymers such as disclosed in Japanese Patent Publication (KOKOKU) No. 59-5216. The inert particles incorporated may be of a single component or may comprise two or more components.

The method of incorporating the inert particles in the polyesters in the present invention is not specified, but it is preferable to use a method in which the inert particles are added in the polymerization step for forming the polyesters, or a method in which the particles are melt kneaded with the polyesters before film forming.

In the present invention, a film with its surface roughened to an appropriate degree by a method such as mentioned above is obtained, but in order to satisfy workability, resolution in printing and print quality to an even higher level, the average roughness (Ra) along the center line of the film surface is preferably 0.02 to 0.2 $\mu$m, more preferably 0.05 to 0.15 $\mu$m, and it is suggested to select the working conditions appropriately so that the desired Ra will be provided.

A process for producing a polyester film according to the present invention is described below.

In the present invention, polymers are supplied to a known melt extruder and heated to a temperature higher than the melting points of the polymers for melting them. The molten polymers are then extruded from the slit die and rapidly cooled to a temperature below the glass transition temperature on a rotary cooling drum and solidified to obtain a non-oriented sheet of a substantially amorphous state. In this operation, in order to improve flatness of the sheet, it is preferable to elevate adhesion between the sheet and the rotary cooling drum, and for this purpose, usually an electrostatic pinning method and/or a liquid coating adhesion are used.

The thus obtained sheet is stretched in two axial directions to make a film. Stretching is conducted as follows. First the said non-stretched sheet is stretched 2.5 to 7.0 times, preferably 3.0 to 5.0 time in one direction at a temperature in the range of preferably 70 to 100˚C, more preferably 75 to 85˚C, and then further stretched 2.5 to 7.0 times, preferably 3.0 to 5.0 times in the direction perpendicular to the direction of the first stretching at a temperature in the range of 70 to 100˚C, preferably 75 to 95˚C, to obtain a biaxially oriented film.

Stretching in one direction may be conducted in two or more steps. In this case, also, it is preferable that the final stretch ratio falls in the above-defined range. It is also possible to biaxially stretch the sheet simultaneously 6 to 40 times in areal ratio.

The thus obtained film may be subjected to a heat treatment, and if necessary, it may be re-stretched in the machine and/or transverse direction before or after the heat treatment.

In the present invention, for obtaining a film having the said heat shrink properties, preferably the sheet is stretched 6 times or more in areal ratio, and the stretched film is substantially not subjected to a heat treatment, or when a heat treatment is conducted, it is performed at a temperature not higher than 120˚C, preferably not higher than 100˚C for a period of one second to 5 minutes, with the film relaxed or maintaining the fixed length.

In the production of the thermal mimeograph stencil paper, there could take place curling which is considered due to shrinkage of the film in the drying step at around 40 to 70˚C or during storage for a long period of time including summertime. In the present invention, therefore, in order to prevent such curling, the obtained film is subjected to aging at 30 to 60˚C for a period of 5 hours to 5 days, preferably at 40 to 50˚C for a period of 12 hours to 3 days as this treatment provides good anticurl properties under the said environment.

BEST MODE FOR CARRYING OUT THE INVENTION

The present invention will be described in further detail with reference to the examples thereof, but the present invention is not limited to these examples but can be embodied as well in other forms without departing from the scope of the invention. The methods of determining the properties used in the present invention are as described below.

(1) Dynamic modulus-temperature properties (E"(T)˚C)

The major dispersion peak temperature of the dynamic modulus-temperature properties measured by using "TMA/SS6100" mfd. by Seiko Instruments Inc. was expressed as E"(T)˚C. Measurement was made under the following conditions: sample width = 4 mm; amplitude load = 2 g; frequency = 0.1 HZ; temperature raising rate = 5˚C /min; measurement temperature range = 20-200˚C.

(2) Shrinkage starting temperature (˚C)

Measured by TMA/SS6100 (Seiko Instruments Inc.). A 4 mm wide and 20 mm long test piece, with a load of 0.5 g applied thereto to give initial tension, was heated at a rate of 5˚C/min, and measurement was made up to 175˚C. Regarding the shrinkage starting temperature of the film, the intersection of the base before start of shrinkage of the film and the tangential line of the point at which shrinkage gradient of the film is maximized was taken as shrinkage starting temperature.

(3) Heat shrinkage (%)

The sample was subjected to a 3-minute heat treatment in an oven kept at a prescribed temperature (either 90˚C or 150˚C) in a tension-less state, and the length of the sample after the heat treatment was measured. Heat shrinkage was calculated from the following equation.

$$\texttt{Heat shrinkage = \{(sample length before heat treatment) -}$$
$$\texttt{(sample length after heat treatment)\} X 100 / (sample}$$
$$\texttt{length before heat treatment)}$$

(4) Young's modulus

Using a tensile tester Intesco Model 2001 (mfd. By Intesco Co., Ltd.), a 300 mm long and 20 mm wide sample film was pulled at a strain rate of 10%/min in a chamber adjusted to 23˚C and 50% RH. Taking the initial rectilinear portion of the tensile stress-strain curve, Young's modulus was determined from the following equation.

$$\mathbf{E = \Delta\sigma/\Delta\varepsilon}$$

wherein E is Young's modulus (MPa), $\Delta\sigma$ is difference in stress due to original average sectional area between two points on the straight line, and $\Delta\varepsilon$ is difference in strain between the same two points as above.

(5) Anticurl properties

Using Japanese paper made of Manila hemp fiber as support and a vinyl-based resin dissolved in toluene as adhesive, a 1.5 $\mu$m polyester film and the said Japanese paper were laminated together with the said adhesive and dried in a 50˚C air oven for 10 seconds to obtain a thermal mimeograph stencil paper, and this stencil paper was subjected to a one-week treatment in a 50˚C and 90% RH thermo-hygrostat. A curling test was conducted by cutting off a 50 mm wide test piece from the sample and leaving it in an atmosphere of 25˚C and 65% RH. For determining the amount of curl, the height of curl at both ends of the test piece was measured. In the case where the test piece curled cylindrically, the diameter of the cylindrical form was measured. When the height of curl at both ends of the test piece is less than 10 mm, there is no practical problem. The amount of curl was measured in two directions, viz. in the longitudinal and transverse directions, and the larger value of measurement was represented as the amount of curl.

(6) Practical performance of thermal mimeograph stencil paper

Japanese paper was laminated to a film to make a stencil paper. This stencil paper was perforated the thermal head with an applied energy of 0.09 mJ and 0.12 mJ to form character images and 16-gradation tone images. The condition of perforation in the tone image portion was observed microscopically from the film side of the worked stencil paper, and evaluation was made on the following items.

(a) Perforating sensitivity

◎: Desired perforation could be done faultlessly and the size of the formed perforations was also sufficient.

○: Desired perforation could be done almost faultlessly and the size of the perforations was also sufficient.

Δ: There were the few parts where perforation could not be done as desired or the size of the perforations was insufficient.

×: There were many parts where perforation could not be done as desired, and the size of the perforations was also insufficient, posing the problems for practical application.

Using the worked stencil paper, actual printing was conducted by Lithograph AP7200 Printer (mfd. by Riso Kagaku Corporation), and concerning the obtained characters and images, the following matters were evaluated through visual observation.

(b) Print quality

◎: It was possible to print clearly with absolutely no unevenness of density and blotting.

○ : It was possible to print clearly with no unevenness of density and blotting.

Δ: Unevenness of shade and blotting were seen slightly, and also the print rather lacked sharpness.

×: Unevenness of shade and/or blotting and blurring were seen explicitly.

(c) Wrinkles and distortion around perforations

◎: No film wrinkles were observed around the continuously formed perforations in the solid print area.

○: Film wrinkles were slightly observed around the continuously formed perforations in the solid print area.

×: Extensive film wrinkles were observed around the continuously formed perforations in the solid print area.

(d) Working life

The test piece was placed in contact with a 25 mm-diameter metallic drum through an angle of 180 degrees and subjected to repetitive abrasion by rotating the drum to let the test piece be abraded at a rate of 10 mm/min. The change of the film surface or the degree of film damage after 24 hours of repetition of abrasion with a length of abrasion of 75 mm was rated by the following three-grade formula.

○: Film surface change was small, and damage was slight.

Δ: Slight scratches were seen on the film surface, but no remarkable abrasion of the film was observed.

×: The film surface was partly broken from the perforated portion.

The polyesters used in the Examples and the Comparative Examples were produced as described below.

(Polyester A)

100 parts by weight of dimethyl naphthalene-2,6-dicarboxylate, 60 parts by weight of ethylene glycol and 0.1 part by weight of calcium acetate monohydrate were supplied to a reactor to carry out ester exchange reaction. Setting the reaction starting temperature at 180˚C, the reaction temperature was raised gradually with effusion of methanol, reaching 230˚C in 4 hours, at which point the ester exchange reaction was substantially terminated. Then 0.04 part by weight of phosphoric acid was added, after which 0.30 part by weight of calcium carbonate having an average particle size of 1.5 $\mu$m and 0.04 part by weight of antimony trioxide were further added to carry out polycondensation reaction in the usual way. Namely, temperature was gradually raised while gradually reducing pressure, with temperature reaching 290˚C and pressure reduced to 0.3 mmHg in 2 hours. At the point when 4 hours have passed after start of the reaction, the reaction was terminated and polyethylene naphthalate was discharged out from the reactor under nitrogen pressure. Intrinsic viscosity [η] of the obtained polyethylene naphthalate was 0.70.

(Polyester B)

100 parts by weight of dimethyl terephthalate, 60 parts by weight of ethylene glycol and 0.1 part by weight of calcium acetate monohydrate were supplied to a reactor to carry out polyester exchange. Setting the polyester exchange reaction starting temperature at 170˚C, the reaction solution was heated with effusion of methanol to start ester exchange reaction. The temperature was raised to 230˚C in 4 hours to conduct ester exchange reaction. After the end of this ester exchange reaction, 5 parts by weight of an ethylene glycol slurry containing 0.5% by weight of spherical silica particles having an average size of 0.70 $\mu$m was added to the reaction product, after which 0.04 part by weight of phosphoric acid and then 0.005 part by weight of tetrabutyl titanate were added to carry out polycondensation reaction. The reaction solution was heated while reducing pressure in the system, with temperature reaching 280˚C and pressure reduced to 0.3 mmHg in 2 hours after start of the polycondensation reaction. Upon passage of several more hours, the polycondensation reaction was terminated to obtain polyester B. Intrinsic viscosity [$\eta$] of this polyester B was 0.70.

(Polyester C)

Polyester C was obtained in the same way as polyester B described above except that 78 parts by weight of dimethyl terephthalate and 22 parts by weight of dimethyl isophthalate were used in place of 100 parts by weight of dimethyl terephthalate. Intrinsic viscosity [$\eta$] of this polyester C was 0.70.

(Polyester D)

Polyester D was obtained according to a direct polymerization method from 1,4-butanediol used as polyhydric alcohol moiety and terephthalic acid used as dicarboxylic acid moiety. Intrinsic viscosity [$\eta$] of this polyester D was 1.05.

Example 1

15 parts by weight of polyester A, 35 parts by weight of polyester C and 50 parts by weight of polyester D were blended uniformly, melt-kneaded by a double-screw extruder and extruded into a sheet. The extrudate was rapidly cooled and solidified by an electrostatic cooling method on a rotary cooling drum set at a surface temperature of 30˚C to obtain a 24 $\mu$m thick substantially amorphous sheet. This sheet was stretched 4.0 times in the machine direction at 75˚C, then further stretched 4.0 times in the transverse direction at 85˚C and heat treated for 6 seconds at 95˚C while relaxing it 2.0% to produce a 1.5 $\mu$m thick biaxially oriented film. This film was laminated to a porous tissue paper according to a conventional method to make a thermal mimeograph stencil paper and mimeographing was carried out with this stencil paper.

Example 2

The same procedure as defined in Example 1 was conducted except that 20 parts by weight of polyester A, 40 parts by weight of polyester C and 40 parts by weight of polyester D were blended as starting polyesters and that the extruded sheet was stretched 4.5 times in the machine direction and 4.3 times in the transverse direction and then heat treated for 6 seconds with 7% relaxation at 105˚C to make a thermal mimeograph stencil paper and mimeographing was carried out with this stencil paper.

Example 3

A thermal mimeograph stencil paper was made in the same way as in Example 1 except for use of 20 parts by weight of polyester A, 30 parts by weight of polyester B and 50 parts by weight of polyester C as starting polyesters, and mimeographing was carried out with this stencil paper.

Example 4

A thermal mimeograph stencil paper was obtained according to the same procedure as Example 2 except that the heat treatment after transverse stretching was conducted at 110˚C with 15% relaxation for 6 seconds, and mimeographing was carried out with this stencil paper.

Example 5

A thermal mimeograph stencil paper was made according to the same procedure as Example 2 except that the heat treatment after transverse stretching was conducted at 105˚C with 10% relaxation for 6 seconds, and mimeographing was carried out with this stencil paper.

Example 6

A thermal mimeograph stencil paper was made according to the same procedure as Example 2 except that the heat treatment after transverse stretching was conducted at 98˚C with 7% relaxation for 6 seconds, and mimeographing was carried out with this stencil paper.

Example 7

A thermal mimeograph stencil paper was made according to the same procedure as Example 1 except that the sheet was stretched 4.3 times in the transverse direction and then heat treated at 95˚C for 6 seconds, and mimeographing was carried out with this stencil paper.

Comparative Example 1

A thermal mimeograph stencil paper was made according to the same procedure as Example 1 except for use of 40 parts by weight of polyester A, 25 parts by weight of polyester C and 35 parts by weight of polyester D as starting polyesters, and mimeographing was carried out with this stencil paper.

Comparative Example 2

A thermal mimeograph stencil paper was made according to the same procedure as Example 1 except for use of 5 parts by weight of polyester A, 25 parts by weight of polyester C and 70 parts by weight of polyester D as starting polyesters, and mimeographing was carried out with this stencil paper.

Comparative Example 3

A thermal mimeograph stencil paper was made according to the same procedure as Example 1 except for use of 30 parts by weight of polyester A, 45 parts by weight of polyester C and 25 parts by weight of polyester D as starting polyesters, and mimeographing was carried out with this stencil paper.

Comparative Example 4

A thermal mimeograph stencil paper was made according to the same procedure as Example 2 except that a 155 $\mu$m thick amorphous sheet was obtained and, from this sheet, a biaxially oriented film with a film thickness of 8.0 $\mu$m was produced, and mimeographing was carried out with this stencil paper.

The obtained results are shown collectively in Tables 1 and 2.

Table 1

|  | E" (t) (˚C) | Shrinkage starting temperature (˚C) | Rate of shrinkage (%) | $S_{TD}/S_{MD}$ | Young's modulus (MPa) |
|---|---|---|---|---|---|
| Example 1 | 69 | 73 | 36 | 0.85 | 3300 |
| Example 2 | 72 | 75 | 34 | 0.64 | 3700 |
| Example 3 | 71 | 78 | 28 | 0.77 | 3800 |
| Example 4 | 72 | 78 | 33 | 0.27 | 3600 |
| Example 5 | 73 | 73 | 35 | 0.40 | 3900 |
| Example 6 | 72 | 77 | 37 | 0.64 | 3600 |
| Example 7 | 73 | 76 | 35 | 1.15 | 3500 |
| Comp. Example 1 | 79 | 80 | 26 | 0.88 | 3900 |
| Comp. Example 2 | 57 | 60 | 20 | 0.71 | 2600 |
| Comp. Example 3 | 78 | 75 | 30 | 0.78 | 3600 |
| Comp. Example 4 | 73 | 75 | 36 | 0.91 | 3600 |

Table 2

|  | Curling (mm) | Perforating sensitivity | Print quality | Perforating distortion | Abrasion resistance |
|---|---|---|---|---|---|
| Example 1 | 2 | ○ | ○ | ○ | ○ |
| Example 2 | 0 | ◎ | ○ | ○ | ◎ |
| Example 3 | 5 | ○ | ○ | ○ | ○ |
| Example 4 | 0 | ◎ | ◎ | ◎ | ◎ |
| Example 5 | 0 | ◎ | ◎ | ◎ | ◎ |
| Example 6 | 3 | ○ |  | ○ | ○ |
| Example 7 | 15 | ○ | ○ | × | ○ |
| Comp. Example 1 | 7 | △ | △ | △ | ◎ |
| Comp. Example 2 | $31\phi^{1)}$ | △ | △ | × | × |
| Comp. Example 3 | 7 | ○ |  | △ | ○ |
| Comp. Example 4 | 3 | × | × | × | ◎ |

*1: The test piece curled in a cylindrical form, so the diameter (mm) of the cylindrical form is shown here.

INDUSTRIAL APPLICABILITY

The film for thermal mimeograph according to the present invention excels in mechanical properties, anticurl properties and abrasion resistance, so that it is possible to obtain a large number of copies from the perforated stencil. Also, because of minimized film shrinkage and deformation during perforation, there can be obtained clear images optimal for the applications requiring high image quality where the probability of correct perforation and the shape of perforations are the important factors like photographic images. Thus, the industrial value of the present invention is high.

**Claims**

1.  A polyester film for high sensitive thermal mimeograph stencil paper, which is a biaxially stretched polyester film comprising a composition of three or more types of polyester and having a thickness of 1.0 to 7.0 $\mu$m, the Young's modulus of said film being not less than 3,000 MPa, and the major dispersion temperature E''(t) of its dynamic viscoelasticity-temperature characteristics as determined by the dynamic viscoelasticity method being 60 to 75˚C.

2.  A polyester film for high sensitive thermal mimeograph stencil paper according to claim 1, wherein the shrink properties of the film satisfy the following formulae (1) to (3) at the same time:

$$St \geqq 70°C \qquad (1)$$

$$S_{150} \geqq 25\% \qquad (2)$$

$$S_{TD}/S_{MD} \leqq 0.9 \qquad (3)$$

wherein St is shrinkage starting temperature (˚C), $S_{150}$ is the shrinkage (%) in the machine direction of the film at 150 ˚C, $S_{MD}$ is the shrinkage (%) in the machine direction of the film at 90˚C, and $S_{TD}$ is the shrinkage (%) in the transverse direction of the film at 90˚C.

**3.** A polyester film for high sensitive thermal mimeograph stencil paper according to claim 1 or 2, wherein the polyesters constituting the biaxially oriented polyester film comprise a polyethylene naphthalate-based polyester (A), a polyethylene terephthalate-based polyester (B) and a polybutyrene terephthalate-based polyester (C) which polyester (A), (B) and (C) are contained in the ratios satisfying the following formulae (4) to (6) at the same time:

$$5 \leqq a \leqq 35 \qquad (4)$$

$$30 \leqq b \leqq 50 \qquad (5)$$

$$30 \leqq c \leqq 60 \qquad (6)$$

wherein "a" is the ratio (wt%) of the component (A), "b" is the ratio (wt%) of the component (B) and "c" is the ratio (wt%) of the component (C).

**Patentansprüche**

**1.** Polyesterfolie für hochempfindliches Thermomimeographenmatrizenpapier, welche eine biaxial gereckte Polyesterfolie darstellt, die eine Zusammensetzung von drei oder mehreren Typen an Polyester umfasst und eine Dicke von 1,0 bis 7,0 $\mu$m aufweist,
wobei der Youngsche Elastizitätsmodul der Folie nicht unterhalb von 3.000 MPa liegt und
die Hauptdispersionstemperatur E" (t) von deren dynamischen viskoelastischen Temperatureigenschaften, bestimmt durch das dynamische Viskoelastizitätsverfahren, 60 bis 75˚C beträgt.

**2.** Polyesterfolie für hochempfindliches Thermomimeographenmatrizenpapier nach Anspruch 1, worin die Schrumpfeigenschaften der Folie die folgenden Formeln (1) bis (3) zur selben Zeit erfüllen:

$$St \geq 70°C \qquad (1)$$

$$S_{150} \geq 25\% \qquad (2)$$

$$S_{TD}/S_{MD} \leq 0{,}9 \qquad (3)$$

worin St die Schrumpfausgangstemperatur (˚C) darstellt, $S_{150}$ die Schrumpfung (%) in Maschinenrichtung der Folie bei 150˚C ist, $S_{MD}$ die Schrumpfung (%) in Maschinenrichtung der Folie bei 90˚C darstellt und $S_{TD}$ die Schrumpfung (%) in Querrichtung der Folie bei 90˚C ist.

**3.** Polyesterfolie für hochempfindliches Thermomimeographenmatrizenpapier nach Anspruch 1 oder 2, worin die die biaxial orientierte Polyesterfolie ausmachenden Polyester einen Polyethylennaphthalat-basierten Polyester (A), einen Polyethylenterephthalat-basierten Polyester (B) und einen Polybutyrenterephthalat-basierten Polyester (C) umfassen, wobei die Polyester (A), (B) und (C) in den Verhältnissen enthalten sind, welche die folgenden Formeln (4) bis (6) zur selben Zeit erfüllen:

$$5 \leq a \leq 35 \qquad (4)$$

$$30 \leq b \leq 50 \qquad (5)$$

$$30 \leq c \leq 60 \qquad (6)$$

worin "a" das Verhältnis (Gew.-%) der Komponente (A) ist, "b" das Verhältnis (Gew.-%) der Komponente (B) darstellt und "c" das Verhältnis (Gew.-%) der Komponente (C) ist.

**Revendications**

1. Film de polyester pour papier pour stencils hautement thermosensible, qui est un film de polyester étiré de manière biaxiale comprenant une composition de trois ou plus types de polyester et possédant une épaisseur de 1,0 à 7,0 $\mu$m, le module de Young dudit film n'étant pas inférieur à 3 000 MPa, et la température de dispersion principale E"(t) de ses caractéristiques de viscoélasticité dynamique - température déterminées selon le procédé de visco-élasticité dynamique étant de 60 à 75°C.

2. Film de polyester pour papier pour stencils hautement thermosensible selon la revendication 1, dans lequel les propriétés de rétrécissement du film satisfont les formules (1) à (3) suivantes en même temps :

$$St \geq 70°C \qquad (1)$$

$$S_{150} \geq 25\% \qquad (2)$$

$$S_{TD}/S_{MD} \leq 0,9 \qquad (3)$$

dans lesquelles St est la température de début de rétrécissement (°C), $S_{150}$ est le rétrécissement (%) dans le sens machine du film à 150°C, $S_{MD}$ est le rétrécissement (%) dans le sens machine du film à 90°C, et $S_{TD}$ est le rétrécissement (%) dans le sens transversal du film à 90°C.

3. Film de polyester pour papier pour stencils hautement thermosensible selon la revendication 1 ou 2, dans lequel les polyesters constituant le film de polyester orienté de manière biaxiale comprennent un polyester à base de poly (naphtalate d'éthylène) (A), un polyester à base de poly(téréphtalate d'éthylène) (B) et un polyester à base de poly (téréphtalate de butyrène) (C), lesquels polyesters (A), (B) et (C) sont contenues dans les rapports satisfaisant les formules (4) à (6) suivantes en même temps :

$$5 \leq a \leq 35 \qquad (4)$$

$$30 \leq b \leq 50 \qquad (5)$$

$$30 \le c \le 60 \qquad (6)$$

dans lesquelles « a » est le rapport (% en poids) du composant (A), « b » est le rapport (% en poids) du composant (B) et « c » est le rapport (% en poids) du composant (C).